# EUROPÄISCHE PATENTSCHRIFT

(11) **EP 3 877 299 B1**
(45) Veröffentlichungstag und Bekanntmachung des Hinweises auf die Patenterteilung: **09.08.2023**
(21) Anmeldenummer: 19797270.6
(22) Anmeldetag: 31.10.2019
(51) Int. Cl.: B65G 1/04, B65G 1/137

(54) **VERFAHREN ZUR AUTOMATISIERUNG VON WARENSTRÖMEN IN EINEM WARENLAGER UND AUFBEWAHRUNGSBEHÄLTER/SYSTEM ZUR VERWENDUNG IN EINEM SOLCHEN VERFAHREN**
METHOD FOR AUTOMATING PRODUCT FLOWS IN A WAREHOUSE, AND STORAGE CONTAINER/SYSTEM FOR USE IN THIS KIND OF METHOD
PROCÉDÉ D'AUTOMATISATION DE FLUX DE MARCHANDISES DANS UN ENTREPÔT DE MARCHANDISES

(30) Priorität: 05.11.2018 DE 102018127567
(43) Veröffentlichungstag der Anmeldung: 15.09.2021
(73) Patentinhaber: Gasper, Werner, 53489 Sinzig (DE)
(72) Erfinder: Gasper, Werner, 53489 Sinzig (DE)
(74) Vertreter: Brinkmann & Partner
(86) Internationale Anmeldenummer: PCT/EP2019/079763
(87) Internationale Veröffentlichungsnummer: WO 2020/094495

(56) Entgegenhaltungen:
- EP-A1- 1 462 393
- EP-A1- 1 666 382
- EP-A1- 1 818 285
- EP-A1- 2 883 817
- DE-A1- 3 830 373
- DE-A1- 10 217 391
- DE-B3-102013 010 382
- JP-A- 2004 203 528

## Beschreibung

Die Erfindung betrifft ein Verfahren zur Automatisierung von Warenströmen in einem Warenlager, bei denen Waren eingelagert, ausgelagert, kommissioniert und verpackt werden.

Ausgangspunkt für die Erfindung ist der Versandhandel. Die Erfindung ist auf diesen Bereich aber nicht zu beschränken. Im Versandhandel kommen typischerweise Logistikzentren zum Einsatz. In diese Logistikzentren wird Ware einerseits eingeliefert und verbracht sowie andererseits in anderer Kommissionierung wieder herausgenommen und ausgeliefert. Es finden insofern ein Wareneingang und ein Warenausgang in anderer Zusammensetzung statt.

Zur Zwischenspeicherung der Ware dienen Regale. Diese verfügen über Regalfächer, die eineindeutig identifizierbar sind. Nach dem Stand der Technik wird die hereinkommende Ware auf freie Lagerstellen verteilt. Dabei ist dem System bekannt, welche Ware sich auf welchem Regalplatz befindet. Es gibt zu diesem Zweck eine eineindeutige Identifizierung der Ware beispielsweise über den Barcode und eine Zuordnung dieses Barcodes zur eineindeutigen Lagerplatzposition.

Nach einer kundenseitigen Bestellung soll nun ein Warenausgang stattfinden. Zu diesem Zweck werden die vom Kunden bestellen Waren aus den einzelnen Regalflächen zusammengesucht. Hier gibt es sogenannte Picking-Systeme. Bekannt sind sogenannte "Pick to list"-, "Pick to voice"-, "Pick to light"- und "Pick to mobile robot"-Systeme. Bei dem Pick to list-System werden die bestellten Waren anhand einer Pickliste manuell ausgewählt und dem Lagerfach entnommen. Die Liste kann in analoger oder digitaler Form vorliegen. Bei Pick to Voice-Systemen wird einer menschlichen Lagerfachkraft, dem sogenannten "Picker", Lagerfach und Artikel über eine Sprechfunkverbindung mitgeteilt. Auch hierbei ist das Lagerfach manuell zu entleeren. Gemäß dem Pick to light-System leuchtet an der Lagerstelle, an der die zu verschickende Ware steht, ein Lämpchen auf. Den vorgenannten Picking-Verfahren ist gemein, dass die jeweiligen Lagerfächer manuell zu entleeren und die Ware zur Verpackungsstation zu verbringen ist. Hier landen auch alle anderen Waren, die in einem Packet an den Kunden verschickt werden sollen. Da das Picking-System manuell erfolgt, können Fehler auftreten. Dies macht es erforderlich, an der Packstation noch einmal zu kontrollieren, ob die vom Kunden gewünschte Ware tatsächlich korrekt zusammengestellt worden ist.

Auch das bekannte Pick to mobile robot-System ist nicht frei von Nachteilen. Hierbei werden vergleichsweise kleine und mobile Laufroboter eingesetzt. Die Laufroboter entnehmen die Ware oder komplette Regale dem Lagersystem und verbringt diese an eine Verpackungsstation. Dort wird jedoch eine Lagerfachkraft benötigt, um die Ware den gegebenenfalls angelieferten Regalen zu entnehmen und zu verpacken. Hierdurch wird der Picker jedoch nur teilweise ersetzt, da bekannte Roboter nur sehr eingeschränkt dazu fähig sind Ware unmittelbar aufzunehmen. In den anderen Fällen muss die Ware den Fächern nach wie vor manuell entnommen werden.

Unabhängig vom gewählten System wird die zusammengestellte Ware verpackt, dies zumeist manuell, wobei in Entsprechung der zu verschickenden Waren ein entsprechender Karton nach Größe und Tragfähigkeit auszusuchen ist.

Das aus dem Stand der Technik bekannte System sei nachfolgend anhand eines Beispiels verdeutlicht. Das Warenlager erhält jeweils eine Lieferung Dosen mit gerösteten Erdnüssen, Tüten mit Weingummi und Fußbälle. Die Lieferungen werden ausgepackt und anschließend jeweils in ein eigenes Regalfach mit einer eineindeutigen Kennung verbracht. Alsdann geht eine Bestellung über 3 Dosen Erdnüsse, 10 Tüten Weingummi und 1 Fußball im Warenlager ein. Notwendig ist nun, die Waren für die Bestellung zusammenzustellen. Ein automatisiertes Verfahren ist dabei mit dem Verfahren des Standes der Technik dem Grunde nach nicht möglich, da sich die gewünschten Produkte der Form und ihrer Lage im Regal nach so sehr voneinander unterscheiden, dass derzeit verfügbare Roboter die einzelnen Produkte in der Regel nicht präzise genug greifen können. Demgemäß müssen die bestellten Waren in der gewünschten Menge manuell aus den jeweiligen Regalfächern genommen und einer Packstation zugeführt werden. Dort erfolgt eine Kontrolle der Waren hinsichtlich Art und Menge. Anschließend werden die Waren in einen Karton gepackt und dem Versand übergeben.

Es ist in diesem Zusammenhang ebenfalls bekannt, einzelne Verfahrensschritte des manuellen Verfahrens zu automatisieren. Beispielsweise ist es bekannt, die eingelieferten Waren insgesamt in Kisten mit einheitlicher Größe zu verbringen. Hierdurch kann mittels eines Roboterregals eine Kiste mit der gesamten Ware abgefragt und an eine Ausgabestation verbracht werden. Die Auswahl der bestellten Menge aus der Kiste mit der gesamten Ware kann aufgrund der robotertechnischen Limitationen jedoch nach wie vor nur manuell erfolgen. Gespart wird hierdurch lediglich der Fußweg zu den einzelnen Regalfächern. Die Auswahl der Waren ist aufgrund des manuellen Vorgangs jedoch immer noch fehlerbehaftet, so dass auf eine anschließende Kontrolle an der Packstation nicht verzichtet werden kann.

Auch ist es in den aus dem Stand der Technik bekannten Verfahren ferner notwendig, an jeder Packstation sämtliche verfügbaren Kartongrößen vorzuhalten, um eine beliebige Zusammenstellung von Waren verpacken zu können. Dies hat regelmäßig zur Folge, dass das Verpackungspersonal zu große Kartongrößen für die zu versendenden Waren wählt. Ressourcenverschwendung ist die Folge.

Aus dem Stand der Technik ist gemäß der EP 1 462 393 A1 ferner ein Verfahren zur Automatisierung von Warenströmen in einem Warenlager bekannt, bei dem Waren wenigstens eingelagert, ausgelagert und kommissioniert werden, wobei jeweils eine Einzelware auf jeweils ein Tablar verbracht wird, wobei wenigstens ein der Tablaren mit der Einzelware zum Zwecke der Einlagerung automatisiert in eine Tablaraufnahme einer Lagervorrichtung auslagerungsbereit verbracht wird, wobei verschiedene Tablaren vorgehalten werden, die sich wenigstens hinsichtlich ihrer Abmessungen voneinander unterscheiden, wobei die jeweilige Einzelware in Abhängigkeit ihrer Größe einem der verschiedenen Tablaren zugewiesen wird, wobei ein Tablar oder mehrere gleiche und/oder verschiedene Tablaren bei Vorliegen eines ihre jeweilige Einzelware betreffenden Auftrags zum Zwecke der Auslagerung und Kommissionierung ausgewählt, automatisiert der Tablaraufnahme entnommen und zum Zwecke der Verpackung einer Packstation zugeführt werden.

Die EP 1 818 285 A1 beschreibt ein Verfahren, wonach Einzelwaren jeweils ein ID-Etikett tragen. Zur Unterbringung dieser Einzelwaren in einem Lager kommt ein Ladungsträger zum Einsatz, der ebenfalls über ein ID-Etikett verfügt. Dieses ID-Etikett ist beschreibbar. Nach der EP 1 818 285 A1 wird zur Unterbringung eines Ladungsträgers im Lager dem Ladungsträger eine bestimmte Lagerstelle zugeordnet, die über eine sogenannte Racknummer verfügt. Auf dem ID-Etikett des Ladungsträgers werden sowohl die zuvor ausgesuchte Racknummer als auch eine Liste mit sämtlichen ID-Nummern der Einzelwaren vermerkt, die von diesem Ladungsträger aufgenommen sind. Das System ist mithin darüber informiert, welche und wie viele Einzelwaren von einem Ladungsträger aufgenommen sind und unter welchem Lagerplatz dieser Ladungsträger mit den davon aufgenommenen Einzelwaren abgestellt ist. Um bestimmte Einzelwaren wieder ausfindig machen zu können, sind entsprechende ID-Leseeinheiten vorgesehen, und zwar zum Einlesen des zuvor beschriebenen ID-Etiketts eines Ladungsträgers als auch der an den jeweiligen Einzelwaren befindlichen ID-Etiketten. Der Erfindung liegt damit die **Aufgabe** zu Grunde, ein Verfahren zur Automatisierung von Warenströmen in einem Warenlager anzugeben, welche gegenüber aus dem Stand der Technik bekannten Verfahren und Systemen weniger fehleranfällig sind und die zur Verfügung stehenden Ressourcen effektiver nutzen.

Zur **Lösung** der Aufgabe schlägt die Erfindung ein Verfahren mit den Merkmalen nach Anspruch 1 vor.

Im Unterschied zum Stand der Technik ergibt sich aus dem erfindungsgemäßen Verfahren eine Reihe von Vorteilen. Die eingangsseitig aufgenommene Ware wird nicht als solche in ihrer Gesamtheit in eine Lagervorrichtung, insbesondere in Form eines Warenregals, verbracht. Vielmehr wird jeweils eine Einzelware unter Zwischenordnung eines eineindeutig identifizierbaren Aufbewahrungsbehälters, vorzugsweise einer Kiste, mit vorgegebenen Abmessungen in eine eineindeutig gekennzeichnete Lagerposition verbracht. Hieraus ergibt sich der synergetische Vorteil, dass jede Ware unabhängig von ihrer Form der robotergestützten Verarbeitung zugänglich ist. Dies deshalb, da es auf die Form der Ware nicht länger ankommt. Es wird nicht länger die Ware unmittelbar gehandhabt, sondern der Aufbewahrungsbehälter. Aufgrund der vorgegebenen Form der Aufbewahrungsbehälter können diese - und damit mittelbar die darin enthaltenen Waren - von Robotern problemlos gehandhabt werden. Die manuelle Handhabung der in den Aufbewahrungsbehälter verbrachten Einzelware entfällt komplett. Dies wird erfindungsgemäß durch die synergetische Wirkung der Zwischenordnung des mit einer eineindeutig gekennzeichneten und mit vorgegebenen Abmessungen ausgeführten Aufbewahrungsbehälters realisiert.

Vorzugsweise wird die Gesamtheit der angelieferten Waren zunächst zu Einzelwaren vereinzelt. "Einzelware" bedeutet dabei nicht zwangsläufig, dass die Ware als Einheit oder in einem einzigen Stück vorliegen muss. Vielmehr sind von diesem Begriff auch Kombinationen und Zusammenstellungen, beispielsweise in Form eines Gebindes, aus mehreren Einheiten erfasst. Entscheidend ist in diesem Zusammenhang nur, dass die Einzelwaren in der Zusammenstellung in der sie nach der Vereinzelung in den Aufbewahrungsbehälter verbracht und eingelagert werden, das Lager auch wieder bestimmungsgemäß verlassen. Eine Auftrennung der Einzelwaren als solches findet während des Lageraufenthalts und im Verlauf des erfindungsgemäßen Verfahrens nicht statt. Vielmehr bleibt die Integrität jeder Einzelware während des Verfahrens erhalten. So kann beispielsweise vorgesehen sein, dass ein Kunde Einzeltüten Weingummi kaufen kann. Gleichfalls kann auch vorgesehen sein, dass der Kunde ein Gebinde mit mehreren Weingummi-Tüten kaufen kann. Im Warenbestand befinden sich gemäß diesem Beispiel deshalb einerseits Kisten mit nur einer Weingummi-Tüte sowie andererseits Kisten mit nur einem Gebinde, das dann mehrere Weingummi-Tüten umfasst. Sowohl die einzelne in eine Kiste verbrachte Weingummi-Tüte als auch das in eine separate Kiste verbrachte Gebinde sind "Einzelwaren" im Sinne der Erfindung.

Die Ware wird insoweit vereinzelt und einem eineindeutig gekennzeichneten Aufbewahrungsbehälter, insbesondere einer eineindeutig gekennzeichneten Kiste, zugeordnet, der dann in eine mit einer eineindeutigen Kennung versehene Behälteraufnahme in der Lagervorrichtung verbracht wird.

Vorzugsweise findet zuerst eine genaue Erfassung der Einzelwaren statt, so dass eine eineindeutige Identifizierung möglich ist bzw. es werden Informationen erfasst, die für die spätere Verpackung von Bedeutung sind, beispielsweise besondere Vorschriften für die Verpackung und/oder Lagerung. Erfindungsgemäß wird für jede Ware ein Aufbewahrungsbehälter vorgesehen, die eineindeutig identifizierbar ist. Einzelware und Kiste werden derart informationstechnisch miteinander verbunden, dass über den eineindeutig zuordenbaren Lagerplatz in Form der Behälteraufnahme, die eineindeutige Kistenidentifikation ein Produkt eineindeutig wiedergefunden werden kann.

Die Zwischenordnung der Kiste erbringt den Vorteil, dass eine Vollautomatisierung möglich ist, und zwar unabhängig von der Warengröße, Gewicht, Beschaffenheit oder sonstigen Eigenschaften. Denn die Kisten sind immer standardisiert ausgestaltet, was eine vollautomatische robotergestützte Handhabung ermöglicht.

Geht nun eine Bestellung über bestimmte Waren ein, so kann die zugehörige Kiste und der zugehörige Lagerplatz vom Computersystem bereitgestellt werden und der Roboter fährt rechnergeschützt die entsprechende Lagerposition an, holt die Kiste samt Artikel heraus und die Kiste wird vorzugsweise mittels einer Fördereinrichtung zu einer Packstation gebracht. Diese Abwicklung geschieht vorzugsweise vollautomatisch, wodurch es bei der Verpackung keiner Kontrolle der zusammengestellten Produkte mehr bedarf. Dies erbringt eine erhebliche Verfahrensvereinfachung.

Ferner ist dem System bekannt, welche Arten von Waren verpackt werden sollen. Es weiß daher auch über die Größe und das Gewicht der von der Bestellung erfassten Waren Bescheid. Es wird deshalb mit der Erfindung ferner vorgesehen, Packstationen vorzusehen, wobei jede Packstation nicht unterschiedliche Paketgrößen verpackt, sondern es für ein und dieselbe Paketgröße jeweils eine Packstation gibt. Die zu verpackenden Waren werden insofern in Abhängigkeit des zu wählenden Kartonagenmaterials der einen oder anderen Packstation zugeleitet. Es findet also nicht in Abhängigkeit der zu verpackenden Waren eine Auswahl der Versandkartonage statt, sondern die Ware wird von vornherein in Abhängigkeit der zu wählenden Versandkartonagean die entsprechende Packstation verbracht. Hierdurch ist die fehlerhafte Verwendung des falschen Verpackungsmaterials durch das Bedienpersonal vorteilhafterweise verhindert.

Gemäß einem bevorzugten Merkmal der Erfindung ist es vorgesehen, dass die Aufbewahrungsbehälter als Kisten mit im Wesentlichen rechteckigem Querschnitt ausgebildet sind. Vorzugsweise sind die Kisten aus Kunststoff gebildet. Es können vorzugsweise Kisten in Form von Kühlboxen vorgesehen werden, die zur Aufnahme von verderblicher Ware, insbesondere von Lebensmittel, Medikamenten, Kosmetika und dergleichen bestimmt sind.

Erfindungsgemäß ist es vorgesehen, dass erste einzelwarenbezogene Daten in Form von Artikelnummer, Artikelbezeichnung, Barcode, Maße, insbesondere Länge, Breite und Höhe, Gewicht, Mindest-Haltbarkeits-Datum, Chargennummer, Pharmazentralnummer, Seriennummer und/oder Lagerungs-Spezifikationen, insbesondere Temperatur und Luftfeuchtigkeit elektronisch erfasst und abrufbereit hinterlegt werden. Hierdurch findet zuerst eine genaue Erfassung der Einzelwaren statt, so dass eine eineindeutige Identifizierung möglich ist bzw. es werden Informationen erfasst, die für die spätere Verpackung von Bedeutung sind. Dieser Schritt findet vorzugsweise vor der Verbringung der Einzelware in die jeweilige Kiste statt. Ferner findet dieser Schritt vorzugsweise nach der Vereinzelung statt.

Erfindungsgemäß ist es vorgesehen, dass verschiedene jeweils mit einer eineindeutigen Kennung versehene Aufbewahrungsbehälter vorgehalten werden, die sich wenigstens hinsichtlich ihrer physischen Eigenschaften voneinander unterscheiden, wobei die jeweilige Einzelware in Abhängigkeit wenigstens eines Teils ihrer erfassten ersten einzelwarenbezogenen Daten einem der verschiedenen Aufbewahrungsbehälter zugewiesen wird. Es ist diesbezüglich vorgesehen, dass sich die verschiedenen Aufbewahrungsbehälter hinsichtlich ihrer Abmessung, insbesondere Länge, Breite und Höhe, Gewicht und Isolationseigenschaften, insbesondere hinsichtlich Temperatur und/oder Feuchtigkeitsisolation, voneinander unterscheiden. Hierdurch können Einzelwaren beliebiger Beschaffenheit jeweils einer einzigen Kiste zugewiesen und davon aufgenommen werden.

Gemäß einem bevorzugten Merkmal der Erfindung ist es vorgesehen, dass zweite einzelwarenbezogene Daten in Form der eineindeutigen Kennung des Aufbewahrungsbehälters elektronisch erfasst und abrufbereit hinterlegt werden. Ferner ist es vorzugsweise vorgesehen, dass dritte einzelwarenbezogene Daten in Form der eineindeutigen Kennung der Behälteraufnahme elektronisch erfasst und abrufbereit hinterlegt werden. Hierdurch werden Einzelware und Kiste derart informationstechnisch miteinander verbunden, dass über den eineindeutig zuordenbaren Lagerplatz in Form der Behälteraufnahme und die eineindeutige Kistenidentifikation ein Produkt eineindeutig wiedergefunden werden kann.

Gemäß einem bevorzugten Merkmal der Erfindung ist es vorgesehen, dass verschiedene Lagervorrichtungen und/oder Behälteraufnahmen vorgehalten werden, die sich hinsichtlich ihrer Lagereigenschaften voneinander unterscheiden, wobei der Aufbewahrungsbehälter mit der Einzelware in Abhängigkeit wenigstens eines Teils der erfassten ersten Daten und/oder der zweiten Daten einer der verschiedenen Lagervorrichtungen oder Behälteraufnahmen zugewiesen wird. Es können hierdurch insbesondere Kühlregale und raumtemperierte Warenregale vorgesehen werden, wobei die jeweiligen Kisten mit den Einzelwaren in Entsprechung ihrer Lagerbedürfnisse auf die geeigneten Regale verteilt werden.

Erfindungsgemäß ist es vorgesehen, dass ein Aufbewahrungsbehälter oder mehrere gleiche und/oder verschiedene Aufbewahrungsbehälter bei Vorliegen eines ihre jeweilige Einzelware betreffenden Auftrags in Abhängigkeit wenigstens, eines Teils der jeweiligen einzelwarenbezogenen Daten zum Zwecke der Auslagerung und Kommissionierung ausgewählt und automatisiert der Behälteraufnahme entnommen werden. Vorzugsweise ist es dabei vorgesehen, dass die Verbringung des Aufbewahrungsbehälters in die Behälteraufnahme und/oder die Entnahme des Aufbewahrungsbehälters aus der Behälteraufnahme mittels wenigstens eines Roboters durchgeführt wird.

Erfindungsgemäß ist es vorgesehen, dass der Aufbewahrungsbehälter zum Zwecke der Verpackung einer Packstation zugeführt wird. Vorzugsweise ist dabei vorgesehen, dass der Aufbewahrungsbehälter mit der Einzelware jeweils über eine Fördereinrichtung der Lagervorrichtung und der Packstation zugeführt wird. Hierdurch wird eine Vollautomatisierung der Verfahrensabläufe ermöglicht.

Erfindungsgemäß ist es vorgesehen, dass Packstationen mit unterschiedlichem Verpackungsmaterial eingesetzt werden, wobei der Aufbewahrungsbehälter oder die mehreren Aufbewahrungsbehälter mit der Einzelware in Abhängigkeit wenigstens eines Teils der jeweiligen einzelwarenbezogenen Daten einer Packstation mit bestimmtem Verpackungsmaterial zugeführt wird. Die zu verpackenden Waren werden insofern in Abhängigkeit des zu wählenden Kartonagenmaterials der einen oder anderen Packstation zugeleitet. Es findet also nicht in Abhängigkeit der zu verpackenden Waren eine Auswahl der Versandkartonagestatt, sondern die Ware wird von vornherein in Abhängigkeit der zu wählenden Versandkartonagean die entsprechende Packstation verbracht. Hierdurch ist die fehlerhafte Verwendung des falschen Verpackungsmaterials durch das Bedienpersonal vorteilhafterweise verhindert.

Gemäß einem bevorzugten Merkmal der Erfindung ist es vorgesehen, dass die verpackte

Einzelware oder die verpackten mehreren Einzelwaren dem Warenausgang zugeführt werden und der Aufbewahrungsbehälter zum Zwecke der erneuten Zuweisung einer Einzelware zurückgeführt wird. Die Rückführung geschieht vorzugsweise ebenfalls über eine Fördereinrichtung, wodurch auch dieser Teil des Verfahrens automatisiert erfolgen kann. Ferner wird durch die Wiederverwendung der Kisten die Ressourceneffizienz des Verfahrens weiter verbessert.

Obgleich Ausgangspunkt der Erfindung die Abläufe in einem Logistikzentrum bildet, ist das erfindungsgemäße Verfahren nicht darauf beschränkt. Vielmehr ist es auf verschiedenste Lagergrößen skalierbar. Vorzugsweise kann das Verfahren im Einzelhandel verwendet werden. Es kann insbesondere zur Automatisierung von Warenmärkten, insbesondere Lebensmittelmärkten, mit eigenem lokalem Lager eingesetzt werden. Das Verfahren kann dann vorzugsweise zum Zweck der automatisierten Auffüllung von Auslageregalen oder dem Versandt oder zur abholfertigen Bereitstellung von Online-Bestellungen eingesetzt werden.

Ferner vorgschlagen wird ein Aufbewahrungsbehälter, der selbst nicht Schutzgegenstand ist, zur Verwendung in einem, insbesondere erfindungsgemäßen, Verfahren zur Automatisierung von Warenströmen in einem Warenlager, in Form eines einseitig offenen Quaders, welcher innenseitig einen von außen zugänglichen Volumenraum zur Aufbewahrung von Einzelwaren bereitstellt, dadurch gekennzeichnet, dass in zwei gegenüberliegenden Seitenwänden des Quaders jeweils eine Ausnehmung oder ein Vorsprung ausgebildet ist, welche dazu dienen mit korrespondierenden Ausnehmungen oder Vorsprüngen eines Greifarms eines Roboters zusammenzuwirken, und dass der Aufbewahrungsbehälter mit einer eineindeutigen Kennung versehen ist.

Diese Ausgestaltung ermöglicht die erfindungsgemäße Verfahrensführung zum einen dadurch, dass der Aufbewahrungsbehälter über eine standardisierte geometrische Form verfügt, die der automatisierten Verarbeitung durch einen Greifroboter zugänglich ist. Zum anderen ist er mit einer eineindeutigen Kennung versehen, die die eineindeutige Zuordnung des Aufbewahrungsbehälters zu einer Einzelware einerseits und zu einem Regalfach andererseits ermöglicht.

Vorzugsweise ist der Aufbewahrungsbehälter als quaderförmige Kiste oder Box ausgebildet.

Vorzugsweise ist die offene Seite des Aufbewahrungsbehälters mit einem Deckel verschließbar, insbesondere luft- und/oder flüssigkeitsdicht verschließbar. Der Volumenraum des Aufbewahrungsbehälters kann ferner mit einer Temperaturisolierung ausgerüstet sein. Dies ist insbesondere für Waren von Vorteil, die gekühlt gelagert werden müssen, wie beispielsweise verderbliche Lebensmittel und dergleichen.

Gemäß einem bevorzugten Merkmal ist vorgesehen, dass die Ausnehmungen in gegenüberliegenden langen Seitenwänden des Quaders in Form von Langlöchern ausgebildet sind. Dies hat den Vorteil, dass durch Einführung entsprechend korrespondierender Vorsprünge in das Langloch während des Greifvorgangs eine weitgehende Lagestabilisierung gewährleistet ist. Hierdurch wird vorteilhaft verhindert, dass die in dem Behälter befindliche Ware herausfällt.

Gemäß einem weiteren bevorzugten Merkmal ist es vorgesehen, dass die eineindeutige Kennung an einer der kurzen Seitenwände des Quaders in Form eines optoelektronisch lesbaren Codes, insbesondere eines Strichcodes oder eines QR-Codes, oder eines Funktransponders, insbesondere eines RFID-Transponders, angebracht ist. Hierdurch lässt sich die automatisierte Erkennung des gewünschten Aufbewahrungsbehälters zum Zwecke der Ein- und Auslagerung realisieren.

Es wird ferner vorgeschlagen ein System, das nicht selbst Schutzgegenstand ist, zur Verwendung in einem, insbesondere erfindungsgemäßen, Verfahren zur Automatisierung von Warenströmen in einem Warenlager, aufweisend einen erfindungsgemäßen Aufbewahrungsbehälter und einem Roboter, welcher eine Greifeinrichtung mit zwei beabstandet und parallel zueinander angeordneten Greifarmen aufweist, welche quer zu ihrer Längserstreckung verfahrbar an der Greifeinrichtung angeordnet sind, wobei die Greifeinrichtung über elektronische Erfassungseinheiten zur Erkennung der am Aufbewahrungsbehälter angebrachten eineindeutigen Kennung und der Ausnehmungen oder Vorsprünge des Aufbewahrungsbehälters aufweist, wobei die Greifarme jeweils einen Vorsprung oder eine Ausnehmung aufweisen, welche derart korrespondierend mit den Vorsprüngen oder Ausnehmungen des Aufbewahrungsbehälters ausgebildet sind, dass jeweils ein Vorsprung mit einer Ausnehmung bestimmungsgemäß zusammenwirken.

Durch das System aus Greifroboter und Aufbewahrungsbehälter wird eine weitgehende Automatisierung des erfindungsgemäßen Verfahrens in vorteilhafter Weise ermöglicht.

Vorzugsweise weist eine der elektronischen Erfassungseinrichtungen einen Lasersensor auf, der dazu dient, Form und Entfernung eines Greifarms von der Ausnehmung oder dem Vorsprung der Seitenwand des Aufbewahrungsbehälters zu erfassen. Der Sensor ist dazu vorzugsweise an einem der Greifarme angeordnet. Vorzugsweise verfügt jeder Greifarm über einen eigenen Lasersensor. Vorzugsweise weist eine weitere elektronische Erfassungseinrichtung einen optoelektronischen Sensor, vorzugsweise einen Strichcodescanner oder einen QR-Codescanner, und/oder einen Funkempfänger, vorzugsweise einen RFID-Empfänger, auf. Dieser dient der Erfassung der eineindeutigen Kennung des Aufbewahrungsbehälters. Vorzugsweise sind die elektronischen Erfassungseinrichtungen mit einer Steuereinheit verbunden, die in Abhängigkeit der erfassten Sensordaten die Bewegung, insbesondere die Annäherung und die Entfernung der Greifarme an den bzw. von dem Aufbewahrungsbehälter automatisch steuert.

Gemäß einem bevorzugten Merkmal ist es vorgesehen, dass einer der Greifarme zwei zylindrische Noppen aufweist und dass eine der Seitenwände des Aufbewahrungsbehälters ein Langloch aufweist, wobei die Noppen in das Langloch einführbar ausgebildet und derart beabstandet zueinander angeordnet sind, dass beim Einführen der Noppen in das Langloch jeweils eine Noppe mit einem halbkreisförmigen Ende des Langlochs in Kontakt steht. Dies hat den Vorteil, dass durch Einführung entsprechend korrespondierender Vorsprünge in das Langloch während des Greifvorgangs eine weitgehende Lagestabilisierung gewährleistet ist. Hierdurch wird vorteilhaft verhindert, dass die in dem Behälter befindliche Ware herausfällt. Nachfolgend wird die Erfindung anhand eines nicht beschränkend auszulegenden Ausführungsbeispiels verdeutlicht.

Dabei zeigen:
- Fig.1: die Durchführung eines erfindungsgemäßen Verfahrens mittels eines Systems in schematischer Darstellung;
- Fig. 2: in schematisch perspektivischer Darstellung einen Aufbewahrungsbehälter und
- Fig. 3: in schematischer Draufsicht von oben einen Aufbewahrungsbehälter in Wirkverbindung mit einem Roboterarm.

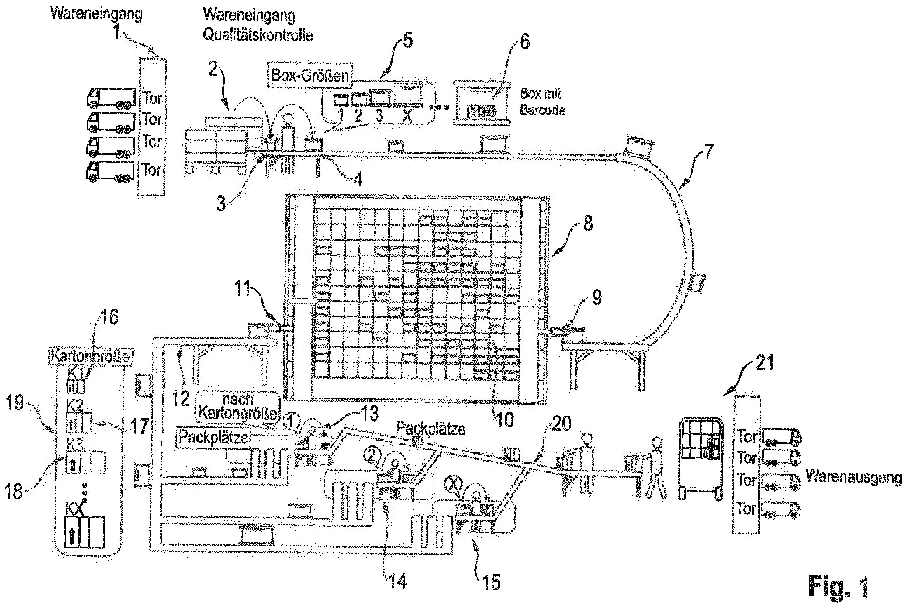

Figur 1 zeigt in einem ersten Schritt die Anlieferung verschiedener Waren über den Wareneingang 1. Diese werden üblicherweise als Palettenware angeliefert. Die auf der Palette befindliche Ware 2 wird in einem zweiten Schritt zu Einzelwaren 3 vereinzelt.

Alsdann werden erste einzelwarenbezogene Daten in Form von Artikelnummer, Artikelbezeichnung, Eingangsdatum, Barcode, Maße, insbesondere Länge, Breite und Höhe, Gewicht, Mindest-Haltbarkeits-Datum, Chargennummer, Pharmazentralnummer, Seriennummer und/oder Lagerungs-Spezifikationen, insbesondere Temperatur und Luftfeuchtigkeit elektronisch erfasst und abrufbereit hinterlegt.

Mindest-Haltbarkeits-Datum, Chargennummer, Pharmazentralnummer, Seriennummer und Lagerungs-Spezifikationen werden nur bei bestimmten Produkten erfasst. Beispielsweise wird die Pharmazentralnummer nur bei Arzneimitteln erfasst. Für das Vorliegende Beispiel werden diese optionalen Daten nicht erfasst.

Nach der Datenerfassung wird in Abhängigkeit der erfassten einzelwarenbezogenen Daten eine geeignete Kiste 4 zugewiesen und ausgewählt. Die Kisten 4 werden in unterschiedlichen standardisierten Abmessungen 5 vorgehalten. Jede Kiste weist eine eineindeutige Kennung 6 in Form eines Strichcodes auf. Die Größe der zugewiesenen Kiste 4 wird dabei in Abhängigkeit der Einzelwarengröße bestimmt. Nach erfolgter Zuweisung wird die Einzelware 3 in die ihr zugewiesene Kiste 4 überführt und die Kennung 6 der Kiste 4 als zweite einzelwarenbezogene Daten elektronisch erfasst.

Die Kiste 4 ist in Form eines einseitig offenen Quaders ausgebildet, welcher innenseitig einen von außen zugänglichen Volumenraum zur Aufbewahrung von Einzelwaren bereitstellt, wobei in zwei gegenüberliegenden Seitenwänden des Quaders jeweils eine Ausnehmung in Form eines Langlochs, einer Aussparung, einer Einfräsung oder dergleichen Nut 22 ausgebildet ist, welche dazu dienen mit korrespondierenden zylindrischen Noppen eines Greifarms eines Roboters zusammenzuwirken.

Anschließend wird die Kiste 4 mit der Einzelware 3 an ein Förderband 7 übergeben. Die Kiste 4 mit der Einzelware 3 wird über das Förderband 7 einem Roboterwarenregal 8 zugeführt. Aufgrund der standardisierten Abmessung der Kiste 4 kann diese zum Zwecke der Einlagerung mittels eines Roboterarms 9 robotergestützt und vollautomatisch in ein Regalfach 10 verbracht werden.

Bei dem Roboterarm 9 bzw. 11 handelt es sich um einen Roboter, welcher eine Greifeinrichtung 24 mit zwei beabstandet und parallel zueinander angeordneten Greifarmen 25 aufweist, welche quer zu ihrer Längserstreckung verfahrbar an der Greifeinrichtung angeordnet sind, wobei die Greifeinrichtung elektronische Erfassungseinheiten zur Erkennung des an der Kiste 4 angebrachten Strichcodes und der Langlöcher des Aufbewahrungsbehälters aufweist. Die Greifarme weisen jeweils zwei zylindrische Noppen auf, welche derart korrespondierend mit dem jeweiligen Langloch der Kiste 4 ausgebildet sind, dass beim Einführen der Noppen in das jeweilige Langloch jeweils eine Noppe mit einem halbkreisförmigen Ende des Langlochs in Kontakt steht.

Die Regalfächer 10 sind ebenfalls mit jeweils einer eineindeutigen Kennung in Form einer elektronischen ID versehen. Die ID des Regalfachs wird informationstechnisch mit der Kennung 6 der Kiste 4 verknüpft und als dritte einzelwarenbezogene Daten elektronisch erfasst und abrufbereit hinterlegt. Hierdurch ist die Lagerposition einer bestimmten Einzelware 3 über die Kennung 6 der Kiste 4 und der ID des Regalfachs 10 eineindeutig in dem Lagersystem bestimmt.

Geht nun in einem weiteren Schritt eine Bestellung über Waren verschiedener Art und/oder Menge ein, werden die Einzelwaren zunächst kommissioniert, d.h. anhand ihrer jeweiligen elektronisch hinterlegten Daten für die Bestellung ausgewählt und listenartig mit Ihrer jeweiligen Lagerposition zusammengestellt.

Entsprechend der Kommissionierungsliste werden anschließend elektronische Auslagerungsaufträge an das Roboterwarenregal 8 übermittelt. Entsprechend der Aufträge werden die Kisten 4 aufweisend die der Liste entsprechenden Einzelwaren mittels eines Roboterarms 11 robotergestützt und vollautomatisiert aus dem Regal 8 ausgelagert und an ein Förderband 12 übergeben.

In Abhängigkeit der Gesamtheit der zu den kommissionierten Einzelwaren hinterlegten Daten wird den entsprechenden Kisten 4 eine Packstation 13, 14, 15 zugewiesen. Die Packstationen 13, 14, 15 unterscheiden sich hinsichtlich des vorgehaltenen Verpackungskartons 16, 17, 18. Es sind dabei unterschiedliche Kartongrößen 19 vorgesehen. Packstation 13 hält Verpackungskartons 16 in einer kleineren Größe bereit. Packstation 14 hält Verpackungskartons 17 in einer mittleren Größe bereit. Packstation 15 hält Verpackungskartons 18 in einer größeren Größe bereit.

Vorliegend werden die kommissionierten Einzelwaren 3 in Abhängigkeit ihrer kombinierten Abmessungen derjenigen Packstation 13, 14, 15 zugeführt, die Verpackungskartons 16, 17, 18 vorhalten die hinsichtlich ihrer Größe mit derjenigen der kommissionierten Ware am besten übereinstimmt.

Nach der Verpackung wird die verpackte Bestellung aufweisend die bestellten Einzelwaren 3 an ein Förderband 20 übergeben und dem Warenausgang 21 zugeführt. Die entleerten Kisten 4 werden an eine nicht dargestellte Fördereinrichtung übergeben und in den Kreislauf zurückgeführt.

Insgesamt kann durch das erfindungsgemäße Verfahren die Fehleranfälligkeit und die Ressourceneffizienz gegenüber aus dem Stand der Technik bekannten Verfahren verbessert werden. Aus der erfindungsgemäßen Verknüpfung einer Einzelware mit einem eineindeutig identifizierbaren Aufbewahrungsbehälter und mit einer eineindeutig identifizierbaren Behälteraufnahme ergeben sich synergetische Vorteile und verfahrenstechnische Möglichkeiten, die weit über einfache Kennungszuordnungen hinaus gehen.

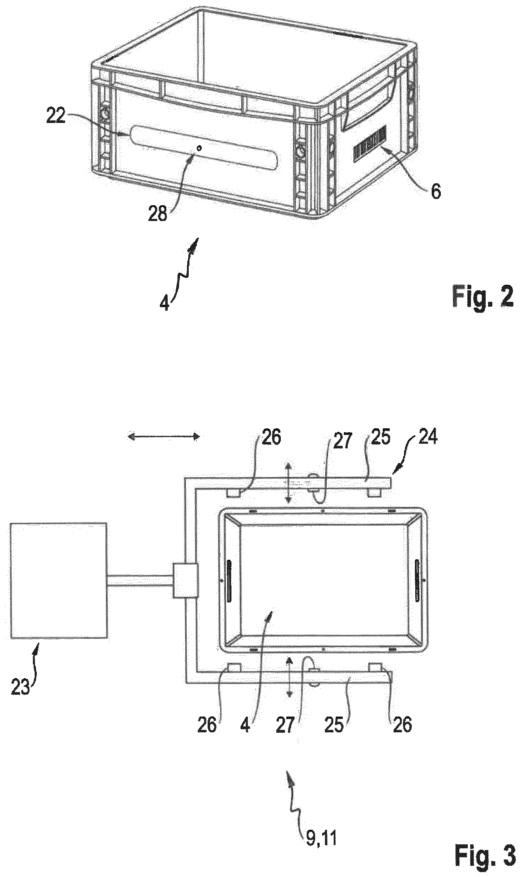

Fig. 2 lässt die Kiste 4 - allgemein auch Aufbewahrungsbehälter oder Aufbewahrungsbox genannt - in schematisch perspektivischer Darstellung erkennen.

Die Kiste 4 ist in an sich bekannter Weise quaderförmig ausgebildet und verfügt über einen Boden sowie über vier Seitenwände. Dem Boden gegenüberliegend ist die Kiste 4 einseitig offen ausgebildet, was eine Bestückung der Kiste 4 mit Ware 2 bzw. eine Entnahme von Ware 2 aus der Kiste 4 ermöglicht. In gezeigten Ausführungsbeispiel verfügen die Stirnseiten der Kiste 4 jeweils über einen Strichcode 6, der eine eineindeutige Identifizierung der Kiste 4 gestattet. Die Längsseitenwände der Kiste 4 verfügen außenseitig jeweils über eine nutförmige Aussparung 22, die im Verwendungsfall mit einem Roboterarm 9 bzw. 11 zusammenwirken. Dies lässt in einer Draufsicht von oben schematisch Fig. 3 erkennen.

Wie sich aus Fig. 3 ergibt, verfügt der Roboterarm 9 bzw. 11 über eine von einem Roboter 23 geführte Greifeinrichtung 24. Diese Greifeinrichtung 24 stellt Greifarme 25 bereit, wobei die Greifeinrichtung 24 und damit auch die Greifarme 25 sowohl in Längsrichtung der Kiste 4 als auch quer hierzu in Relation zur Kiste 4 verfahren werden können, wie dies die in Fig. 3 eingezeichneten Doppelpfeile erkennen lassen.

Jeder Greifarm 25 weist kistenseitig zwei Noppen 26 auf. Diese sind zylinderförmig ausgebildet und weisen geometrische Abmessungen auf, die ein Eintauchen der Noppen 26 in die nutförmigen Aussparungen 22 der Kisten 4 gestatten.

Die Greifarme 25 verfügen kistenseitig des Weiteren über Justagelaser 27, die jeweils mit einem mittig in der zugehörigen Aussparung 22 angeordneten Marker 28 zusammenwirken.

Die vorbeschriebene Konstruktion erlaubt eine Verfahrensweise wie folgt: Die Greifeinrichtung 24 erfasst die Kiste 4 jeweils seitlich links und rechts. Um eine präzise Aufnahme der Kiste 4 zu gewährleisten, sind an den Armen 25 jeweils rechts und links zwei vorstehende Noppen angebracht, die im bestimmungsgemäßen Aufnahmefall der Kiste 4 durch den Roboter 23 in die nutenförmigen Ausfräsungen 22 der Kiste 4 eingreifen. Auf diese Weise ist sichergestellt, dass die Kiste 4 mittels der Greifarme 25 nicht nur erfasst sondern auch arretiert ist. Ein Abkippen, Verdrehen oder Verrutschen der Kisten 4 in Relation zu den Greifarmen 25 ist insoweit ausgeschlossen.

Vor einem Heranfahren des Roboterarms 9 bzw. 11 an die Kiste 4 wird mittels einer elektronischen Erfassungseinheit die Richtigkeit der zu erfassenden bzw. aufzunehmenden Kiste 4 sichergestellt. Hierzu dient die vorzugsweise auf beiden Stirnseiten der Kiste 4 aufgebrachte Kennung, bei der es sich beispielsweise um einen Strichcode handeln kann.

Während des Vorgangs des Heranfahrens des Roboterarms 9 bzw. 11 an die Kiste 4 wird durch eine Lasermessung die Greifeinrichtung 24 exakt auf die Aussparungen 22 der Kiste 4 ausgerichtet. Zu diesem Zweck verfügt die Greifeinrichtung 24 über Laser 27, die mit zugehörigen Markern 28 der Kiste 4 zusammenwirken. Sobald der richtige Justierpunkt, das heißt die lagerichtige Ausrichtung der Greifeinrichtung 24 in Relation zur Kiste 4 erreicht und messtechnisch erfasst ist, greift die Greifeinrichtung 24 zu, wobei die Noppen 26 der Greifeinrichtung 24 lagegenau innerhalb der dafür vorgesehenen Aussparungen 22 zu liegen kommen.

### Bezugszeichen

- 1: Wareneingang
- 2: Ware
- 3: Einzelware
- 4: Kiste
- 5: Abmessungen der Kisten
- 6: Kennung der Kiste
- 7: Förderband
- 8: Roboterwarenregal
- 9: Roboterarm
- 10: Regalfach
- 11: Roboterarm
- 12: Förderband
- 13: Packstation
- 14: Packstation
- 15: Packstation
- 16: Verpackungskarton
- 17: Verpackungskarton
- 18: Verpackungskarton
- 19: Kartongröße
- 20: Förderband
- 21: Warenausgang
- 22: Nut
- 23: Roboter
- 24: Greifeinrichtung
- 25: Greifarm
- 26: Noppen
- 27: Laser
- 28: Marker

## Patentansprüche

1. Verfahren zur Automatisierung von Warenströmen in einem Warenlager, bei dem Waren (2) wenigstens eingelagert, ausgelagert und kommissioniert werden,
wobei jeweils eine Einzelware (3) in jeweils einen mit einer eineindeutigen Kennung (6) versehenen Aufbewahrungsbehälter (4) mit vorgegebenen Abmessungen verbracht wird,
wobei wenigstens einer der Aufbewahrungsbehälter (4) mit der Einzelware (3) zum Zwecke der Einlagerung automatisiert in eine mit einer eineindeutigen Kennung versehene Behälteraufnahme (10) einer Lagervorrichtung (8) auslagerungsbereit verbracht wird, wobei erste einzelwarenbezogene Daten in Form von Artikelnummer, Artikelbezeichnung, Eingangsdatum, Barcode, Maße, Gewicht, Mindest-Haltbarkeits-Datum, Chargennummer, Pharmazentralnummer, Seriennummer und/oder Lagerungs-Spezifikationen elektronisch erfasst und abrufbereit hinterlegt werden,
wobei verschiedene jeweils mit einer eineindeutigen Kennung (6) versehene Aufbewahrungsbehälter (4) vorgehalten werden, die sich wenigstens hinsichtlich ihrer physischen Eigenschaften voneinander unterscheiden, wobei die jeweilige Einzelware (3) in Abhängigkeit wenigstens eines Teils ihrer erfassten ersten einzelwarenbezogenen Daten einem der verschiedenen Aufbewahrungsbehälter (4) zugewiesen wird,
wobei ein Aufbewahrungsbehälter (4) oder mehrere gleiche und/oder verschiedene Aufbewahrungsbehälter (4) bei Vorliegen eines ihre jeweilige Einzelware (3) betreffenden Auftrags in Abhängigkeit wenigstens eines Teils der jeweiligen einzelwarenbezogenen Daten zum Zwecke der Auslagerung und Kommissionierung ausgewählt, automatisiert der Behälteraufnahme (10) entnommen und zum Zwecke der Verpackung einer Packstation (13-15) zugeführt werden,
wobei Packstationen (13-15) mit unterschiedlichem Verpackungsmaterial (16-18) eingesetzt werden, wobei der Aufbewahrungsbehälter (4) oder die mehreren Aufbewahrungsbehälter (4) mit der Einzelware (3) in Abhängigkeit wenigstens eines Teils der jeweiligen einzelwarenbezogenen Daten einer Packstation (13-15) mit bestimmtem Verpackungsmaterial (16-18) zugeführt wird.

2. Verfahren nach Anspruch 1, **dadurch gekennzeichnet, dass** eine Mehrzahl gleichartiger Waren (2) nach deren Einlieferung zu Einzelwaren (3) vereinzelt wird;

3. Verfahren nach Anspruch 1, **dadurch gekennzeichnet, dass** zweite einzelwarenbezogene Daten in Form der eineindeutigen Kennung (6) des Aufbewahrungsbehälters (4) elektronisch erfasst und abrufbereit hinterlegt werden.

4. Verfahren nach Anspruch 1, **dadurch gekennzeichnet, dass** verschiedene Lagervorrichtungen (8) und/oder Behälteraufnahmen (10) vorgehalten werden, die sich hinsichtlich ihrer Lagereigenschaften voneinander unterscheiden, wobei der Aufbewahrungsbehälter (4) mit der Einzelware (3) in Abhängigkeit wenigstens eines Teils der erfassten ersten Daten und/oder der zweiten Daten einer der verschiedenen Lagervorrichtungen (8) oder Behälteraufnahmen (10) zugewiesen wird.

5. Verfahren nach Anspruch 1, **dadurch gekennzeichnet, dass** dritte einzelwarenbezogene Daten in Form der eineindeutigen Kennung der Behälteraufnahme (10) elektronisch erfasst und abrufbereit hinterlegt werden.

6. Verfahren nach Anspruch 1, **dadurch gekennzeichnet, dass** der Aufbewahrungsbehälter (4) mit der Einzelware (3) jeweils über eine Fördereinrichtung (7; 12) der Lagervorrichtung (8) und der Packstation (13-15) zugeführt wird.

## Claims

1. Method for automating product flows in a warehouse, in which goods (2) are at least stored, retrieved and picked,
wherein in each case one individual good (3) is placed in a respective storage container (4) provided with a unique identifier (6) and having predetermined dimensions,
wherein at least one of the storage containers (4) with the individual goods (3) is automatically loaded into a container receptacle (10) provided with a unique identifier of a storage device (8) for storage and ready for removal from storage, wherein first data relating to individual goods in the form of article number, article designation, date of receipt, barcode, dimensions, weight, best-before date, batch number, pharmaceutical central number, serial number and/or storage specification are electronically recorded and stored ready for retrieval,
wherein different storage containers (4), each provided with a unique identifier (6), are kept available, which differ from one another at least with respect to their physical properties, wherein the respective individual good (3) is assigned to one of the different storage containers (4) in dependence on at least a part of its recorded first individual product-related data,
wherein one storage container (4) or a plurality of identical and/or different storage containers (4) are selected in dependence of at least a part of the respective individual goods-related data when an order relating to their respective individual goods (3) is present, for the purpose of removal from storage and order picking, are removed from the container receptacle (10) in an automated manner and are supplied to a packing station (13-15) for the purpose of packing, wherein packing stations (13-15) with different packing material (16-18) are used, wherein the storage container (4) or the plurality of storage containers (4) with the individual goods (3) is/are fed to a packing station (13-15) with specific packaging material (16-18) in dependence on at least a part of the respective individual goods-related data.

2. Method according to claim 1, **characterized in that** a plurality of similar goods (2) is separated into individual goods (3) after they have been delivered.

3. Method according to claim 1, **characterized in that** second data relating to individual goods in the form of the unique identifier (6) of the storage container (4) are recorded electronically and stored ready for retrieval.

4. Method according to claim 1, **characterized in that** different storage devices (8) and/or container receptacles (10) are kept available which differ from one another with regard to their storage properties, the storage container (4) with the individual goods (3) being assigned to one of the different storage devices (8) or container receptacles (10) in dependence on at least part of the recorded first data and/or the second data.

5. Method according to claim 1, **characterized in that** third data relating to individual goods in the form of the unique identifier of the container receptacle (10) are recorded electronically and stored ready for retrieval.

6. Method according to claim 1, **characterized in that** the storage container (4) with the individual goods (3) is fed to the storage device (8) and to the packing station (13-15) in each case via a conveyor device (7; 12).

## Revendications

1. Procédé d'automatisation de flux de marchandises dans un entrepôt de marchandises, dans lequel des marchandises (2) sont au moins stockées, déstockées et préparées,
dans lequel une marchandise individuelle (3) est placée dans un récipient de stockage (4) de dimensions prédéfinies, muni d'un identificateur univoque (6),
au moins l'un des récipients de stockage (4) avec la marchandise individuelle (3) est amené de manière automatisée dans un logement de récipient (10) d'un dispositif de stockage (8) pourvu d'un identificateur univoque, prêt à être déstocké, des premières données relatives à la marchandise individuelle sous forme de numéro d'article, de désignation d'article, de date d'entrée, de code-barres, de dimensions, de poids, de date limite de consommation, de numéro de lot, de numéro central pharmaceutique, de numéro de série et/ou de spécification de stockage étant saisies électroniquement et stockées de manière à pouvoir être récupérées,
différents récipients de stockage (4) pourvus chacun d'un identificateur univoque (6) étant conservés, lesquels se distinguent les uns des autres au moins en ce qui concerne leurs propriétés physiques, la marchandise individuelle respective (3) étant attribuée à l'un des différents récipients de stockage (4) en fonction d'au moins une partie de ses premières données saisies relatives à la marchandise individuelle,
un récipient de stockage (4) ou plusieurs récipients de stockage (4) identiques et/ou différents étant sélectionnés, en présence d'une commande concernant leur marchandise individuelle (3) respective, en fonction d'au moins une partie des données respectives relatives à la marchandise individuelle, en vue du déstockage et de la préparation de commandes, étant prélevés de manière automatisée du logement de récipient (10) et étant amenés à un poste d'emballage (13-15) en vue de l'emballage, des postes d'emballage (13-15) étant utilisés avec différents matériaux d'emballage (16-18),
le récipient de stockage (4) ou les plusieurs récipients de stockage (4) avec la marchandise individuelle (3) étant amenés, en fonction d'au moins une partie des données respectives relatives à la marchandise individuelle, à un poste d'emballage (13-15) avec un matériau d'emballage déterminé (16-18).

2. Procédé selon la revendication 1, **caractérisé en ce qu'**une pluralité de marchandises (2) de même type sont séparées en marchandises individuelles (3) après leur livraison.

3. Procédé selon la revendication 1, **caractérisé en ce que** des deuxièmes données relatives aux marchandises individuelles sont saisies électroniquement sous la forme de l'identificateur univoque (6) du récipient de stockage (4) et déposées de manière à pouvoir être récupérées.

4. Procédé selon la revendication 1, **caractérisé en ce que** l'on conserve différents dispositifs de stockage (8) et/ou logements de récipients (10) qui se distinguent les uns des autres en ce qui concerne leurs propriétés de stockage, le récipient de stockage (4) avec la marchandise individuelle (3) étant attribué à l'un des différents dispositifs de stockage (8) ou logements de récipients (10) en fonction d'au moins une partie des premières données saisies et/ou des deuxièmes données.

5. Procédé selon la revendication 1, **caractérisé en ce que** des troisièmes données relatives aux marchandises individuelles sont saisies électroniquement sous la forme de l'identificateur unique du logement de récipients (10) et sont stockées de manière à pouvoir être récupérées.

6. Procédé selon la revendication 1, **caractérisé en ce que** le récipient de stockage (4) avec la marchandise individuelle (3) est amené, respectivement par un dispositif de transport (7; 12), au dispositif de stockage (8) et au poste d'emballage (13-15).
